# EUROPÄISCHE PATENTSCHRIFT

(11) **EP 4 463 678 B1**
(45) Veröffentlichungstag und Bekanntmachung des Hinweises auf die Patenterteilung: **17.06.2026**
(21) Anmeldenummer: 22847120.7
(22) Anmeldetag: 15.12.2022
(51) Int. Cl.: G01D 5/20

(54) **INDUKTIVE POSITIONSSENSOREINRICHTUNG UND BREMSANLAGE MIT EINER INDUKTIVEN POSITIONSSENSOREINRICHTUNG**
INDUCTIVE POSITION SENSOR DEVICE AND BRAKE SYSTEM HAVING AN INDUCTIVE POSITION SENSOR DEVICE
DISPOSITIF CAPTEUR DE POSITION INDUCTIF ET SYSTÈME DE FREINAGE DOTÉ D'UN DISPOSITIF CAPTEUR DE POSITION INDUCTIF

(30) Priorität: 14.01.2022 DE 102022200420; 14.03.2022 DE 102022202500
(43) Veröffentlichungstag der Anmeldung: 20.11.2024
(73) Patentinhaber: AUMOVIO Germany GmbH, 60488 Frankfurt am Main (DE)
(72) Erfinder: HABIG, Jens, 30175 Hannover (DE); DONNER, Andreas, 30175 Hannover (DE); KNOBLOCH, Anselm, 30175 Hannover (DE)
(74) Vertreter: Aumovio Corporation
(86) Internationale Anmeldenummer: PCT/DE2022/200300
(87) Internationale Veröffentlichungsnummer: WO 2023/134820

(56) Entgegenhaltungen:
- DE-A1- 102013 226 203
- DE-A1- 102016 217 254
- DE-A1- 102018 213 249
- DE-A1- 102020 114 014
- DE-B3- 102016 202 859
- DE-B3- 102016 211 832
- DE-T5- 112019 006 893
- US-A1- 2019 195 963

## Beschreibung

Die Erfindung betrifft eine induktive Positionssensoreinrichtung gemäß dem Oberbegriff von Anspruch 1 und eine Bremsanlage mit solch einer induktiven Positionssensoreinrichtung gemäß dem Anspruch 9.

Induktive Positionssensoren sind im Automotive Bereich weit verbreitet. Mit solchen Positionssensoren werden bspw. lineare Positions- oder rotative Drehwinkellagen eines beweglichen Elements erfasst. Als Positionsempfangseinrichtung werden bspw. Spulensysteme verwendet, welche über gegenseitige Einkopplung (elektrisches Feld zu Spannung) die Position eines sich beweglichen Positionsgeberelements anzeigen. Zur Verwendung kommt mindestens eine Erregerspule und zumindest zwei Empfangsspulen. Solche Spulen werden in bekannterweise auf Leiterplatten gedruckt/aufgebracht, wie es bspw. aus dem Dokument US 2020400465 A1 bekannt ist.

Bei dem Positionsgeberelement handelt es sich meistens um ein bewegliches Bauteil aus leitfähigem, meistens nicht ferromagnetischem, Material. Dies kann bspw. ein Zylinderkolben eines Hauptbremszylinders einer Bremsbetätigungseinrichtung oder ein Flügelrad auf einer Antriebswelle eines Elektromotors sein.

Solche Sensoren arbeiten nach dem induktiven Prinzip. Dabei wird sich zu Nutze gemacht, dass sowohl leitfähige als auch ferromagnetische Werkstoffe die Eigenschaften einer elektromagnetischen Spule beeinflussen. Die von dem metallischen Element hervorgerufen Veränderung der Einkopplung zwischen der Erregerspule und den zumindest zwei Empfangsspulen führt zu einer Spannungsänderung, welche von einer Auswerteeinheit registriert und ausgewertet wird.

Bei Winkelsensoren ist derzeit meist eine 360° umschlingende Spulenanordnung im Einsatz. Bei einer C-förmigen Spulenstruktur kann durch eine "Pos1/2<>Neg1/2 und Pos1/4<>Neg1/2<>Pos1/4" Empfangsspulenstruktur erheblich an Fläche eingespart werden. C-förmige Spulenstrukturen (bzw. C-förmige Leiterplatten) bieten eine wesentlich kostengünstigere Alternative zu einer 360°-Variante. Allerdings ergeben sich durch eine maximale Komprimierung der notwendigen Nutzfläche durch die "Pos1/2<>Neg1/2 und Pos1/4<>Neg1/2<>Pos1/4"-Empfangsspulenstruktur ein Ungleichgewicht in den erzeugten Signalen. Das eine der zwei Signale aus den zwei Empfangsspulen ist derart unsymmetrisch belastet, dass sich ein großer Offsetversatz ergibt. Der Signalmittelwert der unsymmetrisch belasteten Empfangsspule ist daher nicht mehr optimal an eine Signalauswerteelektronik, wie zum Beispiel einem Analog-Digital-Wandler, angepasst. Die unterschiedlichen Offsetspannung des ersten und zweiten Ausgangssignals ermöglichen es somit nicht, beide Signale so zu verstärken, dass eine möglichst optimale Ausnutzung der zur Verfügung stehenden Spannungsbereiche gewährleistet ist. Einbußen in der Signalrobustheit sind die Folge.

Das Dokument DE 10 2018 213 249 A1 beschreibt ein Sensorsystem zur Bestimmung mindestens einer Rotationseigenschaft eines um mindestens eine Rotationsachse rotierenden Elements, wobei ein Geberrad vorgesehen ist. Das Sensorsystem weist einen Schaltungsträger mit einer Erregerspule sowie Empfangsspulen auf. Die Empfangsspulen sind dabei relativ zueinander um die Rotationsachse verdreht angeordnet.

Das Dokument DE 10 2016 202 859 B3 beschreibt einen weiteren Drehwinkelsensor mit einem Statorelement mit einer Statorsendespule und wenigstens zwei zueinander winkelversetzten, gleichartig aufgebauten Statorempfangsspulen, die auf einer Stator-Leiterplatte angeordnet sind.

Einen weiteren Drehwinkelsensor beschreibt das Dokument DE 10 2016 217 254 A1. Bei dem vorgeschlagenen Drehwinkelsensor sollen auch bei radialen Abweichungen des Statorelements von einer Ideallage die dabei auftretenden Veränderungen im Messsignal für die Winkelerfassung kompensiert werden können. Auch das Dokument DE 10 2016 211 832 B3 beschreibt einen Drehwinkelsensor, bei dem radiale Abweichungen kompensiert werden können sollen.

Das Dokument DE 10 2013 226 203 A1 beschreibt eine Positionsmessvorrichtung mit einer Maßverkörperung mit einem Markierungsbereich mit Markierungen, wobei ein Abtastkopf mit Empfängerspule und Kompensationsspule seriell geschaltet sind.

Das Dokument US 2019/195963 A1 beschreibt ein Verfahren zum Bereitstellen eines optimierten Spulendesigns eines Positionsbestimmungssensors mittels einer Simulation von Positionsbestimmungen.

Das Dokument DE 11 2019 006 893 T5 beschreibt einen weiteren planaren linearen induktiver Positionssensor mit einer Schwingspule und zwei Sensorspulen, wobei die Sensorspule Geometrien aufweisen, die derart ausgewählt sind, dass gleiche entgegengesetzte Magnetfelder den Sensorspulen bei Vorhandensein eines von der Schwingspule erzeugten Magnetfeldes induziert werden können.

Schließlich beschreibt das Dokument DE 10 2020 114 014 A1 einen nochmals weiteren Positionssensor, wobei zwei Empfängerspulen eine Leiterbahnstruktur aufweisen, die ausgebildet ist, dass einzelne in Reihe geschaltete Empfängerspulenwindungen jeder Empfängerspule ineinander verschachtelt angeordnet ausgebildet sind.

So nimmt sich die Erfindung die Reduktion der Offsetspannung des Kosinus-Signals eines Motorpositionssensors vor, um eine maximale Amplitudenverstärkung beider Empfangssignale (Sin & Cos) zu ermöglichen. Somit ist die Robustheit bzgl. mechanischer Toleranz im der verbauten Sensor-Leiterplatte zu Sensorgegenstück (bspw. Flügelrad) größer. Dies führt zu weniger Ausschuss in der Produktion und Robustheit bzgl. sicherheitskritischer Zustände bei Positionsdrift.

Es ist Aufgabe der Erfindung eine induktive Positionssensoreinrichtung bereitzustellen, welche einen geringen Versatz (Offset) der ausgegebenen Signale der zumindest zwei Empfangsspulen erzeugt.

Erfindungsgemäß wird eine induktive Positionssensoreinrichtung zur Erfassung einer Positionslage eines Positionsgeberelements mit einer Positionsempfangseinrichtung bereitgestellt, wobei die Positionsempfangseinrichtung eine mehrlagig aufgebaute Leiterplatte mit einer Spulenanordnung umfasst, wobei die Spulenanordnung zumindest eine Erregerspule und zumindest eine erste und eine zweite Empfangsspule umfasst, wobei die erste und die zweite Empfangsspule jeweils eine Anzahl an Windungen umfassen, welche von der Erregerspule zumindest teilweise umschlossen sind, wobei die erste Empfangsspule eine Kompensationswindung umfasst, welche zumindest bereichsweise ober- und/oder unterhalb eines Teilabschnitts der Erregerspule angeordnet ist.

Durch das Einfügen einer Kompensationswindung in die vom Offsetversatz betroffenen Empfangsspule wird zusätzliches ein Feld (bzw. Spannung) von der Erregerspule in die Empfangsspule induziert. Somit verschiebt sich der Spannungsoffset in die gewünschte Richtung des Signales der zweiten Empfangsspule

Abhängig von der Lage der Kompensationswindung in Bezug zu der Erregerspule auf der Leiterplatte wird die Einkopplung des Erregerfeldes von der Position des Positionsgeberelements in die Kompensationswindung beeinflusst. Dies führt wiederum zu einer störenden Beeinflussung des Kompensationsfeldes in Abhängigkeit der Position des Positionsgeberelements. Die vorgeschlagene Kompensationswindung löst auch diese Widrigkeiten dadurch, dass die Kompensationswindung explizit in den Bereich des überstreichenden Sensorgegenstücks positioniert ist.

Um trotzdem eine vom Positionsgeberelement unabhängige Offsetkompensation zu erreichen, wird die Länge (oder bei einem Winkelsensor die Winkelöffnung) der Kompensationswindung so gewählt, dass immer die volle Fläche des Positionsgeberelements und ein Freiraum des Positionsgeberelements (bspw. ein Nichtflügel beim Winkelsensor) die Kompensationswindung überragen. Somit ist der Einfluss der Position des Positionsgebers ausgeglichen.

Dies hat den Vorteil, dass eine hohe Robustheit gegenüber mechanische Positionsveränderungen vorliegt. Zudem gibt es keine Restriktionen, sodass die Leiterplatten-Schaltungs-Auslegung unabhängig ist. Der somit stark reduzierte Flächenbedarf auf der Leiterplatte führt zu einer Kostenreduktion.

Die erfindungsgemäße Anordnung der Kompensationswindung hat zudem den Vorteil, dass die Positionssensoreinrichtung ohne regelmäßige Kalibrierung gute Messergebnisse ausgibt.

Bevorzugt umfasst die mehrlagig aufgebaute Leiterplatte eine erste Lage, eine zweite Lage und zumindest eine zwischen der ersten und der zweiten Lage angeordnete erste Zwischenlage, wobei die Erregerspule eine Anzahl an Wicklungen umfasst, welche an der ersten und an der zweiten Lage aufgebracht sind, wobei die Kompensationswindung der ersten Empfangsspule an der ersten Zwischenlage aufgebracht ist, und die Kompensationswindung in einem vertikalen Bereich zwischen den Wicklungen der Erregerspule der ersten Lage und den Wicklungen der Erregerspule der zweiten Lage bereichsweise angeordnet ist.

Außerdem wird die Kompensationswindung so zwischen die Erregerspule in die Leiterplattenlagen integriert, dass von dem Erregerfeld nur der zur Kompensation notwendige Teil in die Kompensationswindung eingekoppelt wird. Somit ist auch die benötigte zusätzliche Fläche der Kompensationswindung auf der gesamten Leiterplatte nahezu null.

Nach einer bevorzugten Ausführungsform ist die erste Empfangsspule mit ihren Windungen an der ersten und der zweiten Zwischenlage aufgebracht. Nach einer weiteren bevorzugten Ausführungsform ist die zweite Empfangsspule mit ihren Windungen an der ersten und der zweiten Zwischenlage aufgebracht, wobei die zweite Zwischenlage zwischen der ersten und der zweiten Lage angeordnet ist.

Vorzugsweise umfassen die Windungen der ersten und der zweiten Empfangsspule jeweils eine Anzahl an Positiv- und Negativwindungen, wobei diese Positiv- und Negativwindungen diametral von den Wicklungen der Erregerspule umschlossen sind.

Bevorzugt ist die erste Empfangsspule eine Kosinus-Empfangsspule. Bevorzugt ist die zweite Empfangsspule eine Sinus-Empfangsspule.

Weiterhin umfassen die Erregerspule, die erste und die zweite Empfangsspule jeweils einen Anschluss an eine Auswerteinheit.

Verwendung findet die erfindungsgemäße induktive Positionssensoreinrichtung in einer Bremsanlage eines Kraftfahrzeugs. Dort wird die Positionssensoreinrichtung zur Wegbestimmung eines Bremszylinderkolbens oder zur Rotorlagenbestimmung einer Antriebswelle mit einem Flügelrad eines Elektromotors verwendet. Dabei stellen der Bremszylinderkolben oder das Flügelrad das Positionsgeberelement der Positionssensoreinrichtung dar.

Weitere bevorzugte Ausführungsformen der Erfindung ergeben sich aus der nachfolgenden Beschreibung von Ausführungsbeispielen anhand der Figuren.

### Es zeigen:

- Fig. 1: eine erste beispielsgemäße induktive Positionssensoreinrichtung,
- Fig. 2: die erste beispielsgemäße induktive Positionssensoreinrichtung im Detail,
- Fig. 3: eine zweite beispielsgemäße induktive Positionssensoreinrichtung,
- Fig. 4: eine Spulenanordnung der ersten beispielsgemäßen induktiven Positionssensoreinrichtung aus der Figur 1,
- Fig. 5: eine Spulenanordnung der zweiten beispielsgemäßen induktiven Positionssensoreinrichtung aus der Figur 2, und
- Fig. 6: eine beispielsgemäße Positionsempfangseinrichtung.

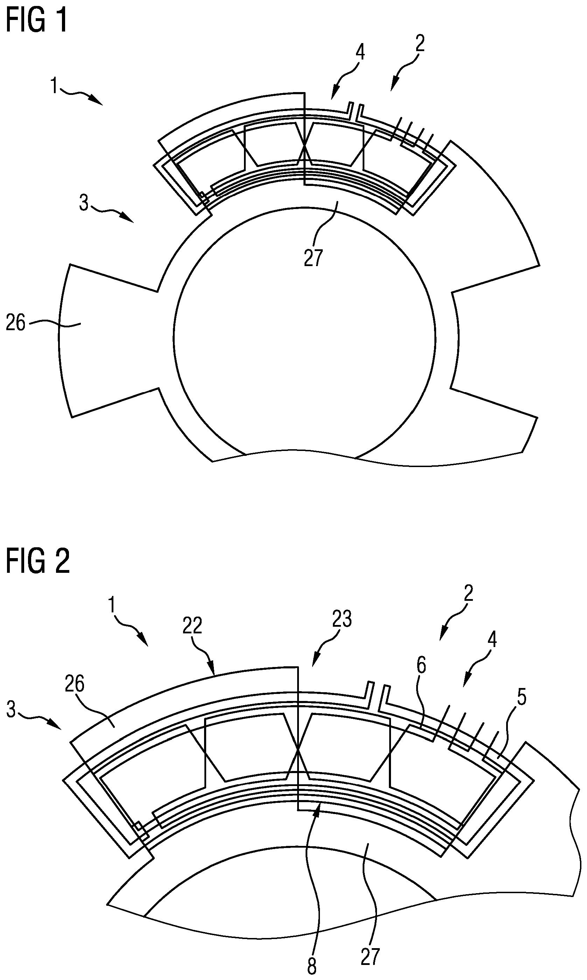

Die Figur 1 zeigt eine erste beispielsgemäße induktive Positionssensoreinrichtung 1 umfassend eine Positionsempfangseinrichtung 2 und ein Positionsgeberelement 3. Positionsempfangseinrichtung 2 umfasst eine (nicht gezeigte) Leiterplatte mit einer Spulenanordnung 4, welche zumindest drei Spulen umfasst.

Positionsgeberelement 3 ist in dem gezeigten Beispiel ein Flügelrad 26. Flügelrad 26 ist dazu eingerichtet über seinen Befestigungsring 27 auf einer (nicht gezeigten) Antriebswelle eines Elektromotors fest angebracht zu werden. Positionsempfangseinrichtung 2 und Positionsgeberelement 3 sind übereinander bzw. nebeneinander räumlich voneinander mit einem geringfügigen Abstand angeordnet. Flügelrad 26 ist aus einem metallischen Werkstoff hergestellt. Flügelrad 26 ist aus einem nicht ferromagnetischen Werkstoff. Flügelrad 26 ist elektrisch leitfähig.

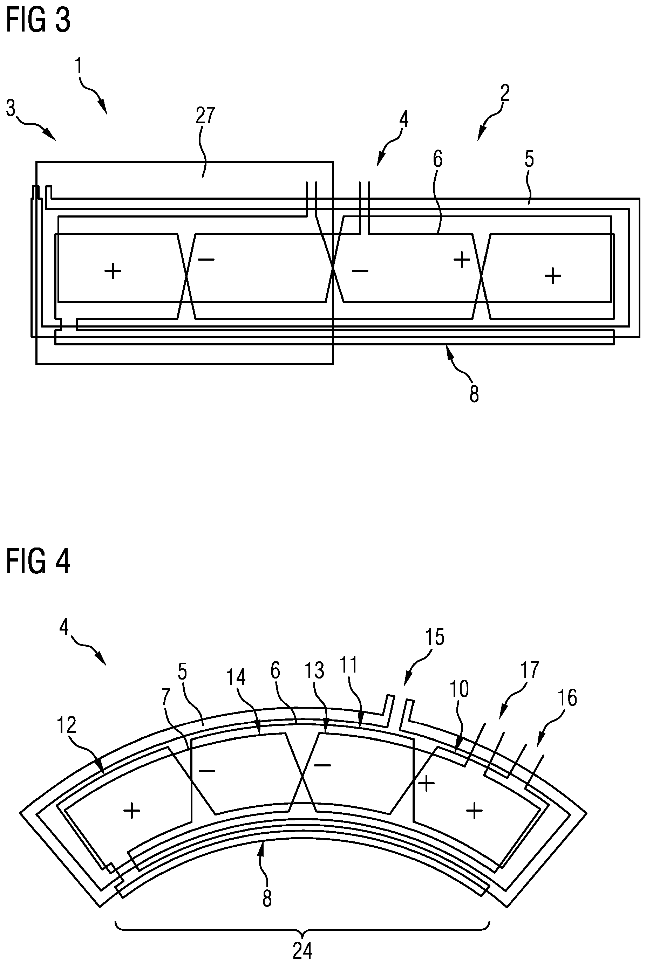

In der Figur 2 ist diese Positionssensoreinrichtung 1 näher im Detail gezeigt. Flügelrad 26 ist leicht transparent dargestellt, um die darunterliegende Spulenanordnung 4 zu verdeutlichen. Auf die genaue Ausgestaltung der Spulenanordnung 4 wird noch bei den Figuren 4 bis 6 näher eingegangen. Spulenanordnung 4 umfasst zumindest eine Erregerspule 5 und zumindest eine erste Empfangsspule 6. Erste Empfangsspule 6 umfasst eine Anzahl an Windungen, darunter eine Kompensationswindung 8. Flügelrad 26 umfasst einen zumindest Flügel 22 und zumindest eine Flügelaussparung 23. Es können mehrere Flügel und Flügelaussparungen an Flügelrad 26 vorgesehen sein, welche sich in Drehrichtung abwechseln. Das bspw. aus einem Aluminiumwerkstoff hergestellte Flügelrad 26 dreht sich mit seinem Flügel 22 bei angetriebener Antriebswelle des Elektromotors über die nicht gezeigte Leiterplatte mit ihrer Spulenanordnung 4. Immer wieder streift Flügel 22 über Spulenanordnung 4 und beeinflusst dabei die induzierte Spannung in erster Empfangsspule 6 und einer zweiten Empfangsspule. Durch die Änderung der Einkopplung eines Erregerfelds von Erregerspule 5 in die erste und zweite Empfangsspule, welche sich beim Überstreifen eines Flügels 22 und der nachfolgenden Flügelaussparung 23 ergibt, wird die Rotationslage der Antriebswelle des Elektromotors bestimmt.

Kompensationswindung 8 von erster Empfangsspule 6 ist zumindest bereichsweise ober- oder unterhalb eines Teilabschnitts von Erregerspule 5 angeordnet. Kompensationswindung 8 folgt dabei der gekrümmten Formgebung des Teilabschnitts von Erregerspule 5.

Des Weiteren ist Kompensationswindung 8 derart angeordnet, dass Befestigungsring 28 von Flügelrad 26 nicht darüber liegt. Kompensationswindung 8 ist derart angeordnet, dass Flügel 22 und Flügelaussparung 23 darüberfahren.

Positionsempfangseinrichtung 2 ist dem Beispiel nach den Figuren 1 und 2 C-förmig ausgeführt. D.h. die nicht gezeigte Leiterplatte und Spulenanordnung 4 haben ebenfalls eine C-form. Solch eine C-form bedarf zwar weniger Bauraum, stellt aber erhöhte Anforderungen für eine gute Signalgüte.

Die Figur 3 zeigt eine zweite beispielsgemäße induktive Positionssensoreinrichtung 1 umfassend Positionsempfangseinrichtung 2 und Positionsgeberelement 3. Positionsempfangseinrichtung 2 umfasst ebenfalls eine (nicht gezeigte) Leiterplatte mit Spulenanordnung 4, welche zumindest drei Spulen umfasst. Positionsgeberelement 3 ist in dem gezeigten Beispiel ein Zylinderkolben 27. Zylinderkolben 27 gehört bspw. zu einem Hauptbremszylinders einer Bremsbetätigungsvorrichtung. Zylinderkolben 27 verfährt bei einer Betätigung von Bremsbetätigungsvorrichtung parallel entlang zu Positionsempfangseinrichtung 2. Dadurch kann mittels Positionsempfangseinrichtung 2 die Position bzw. der Verfahrweg von Zylinderkolben 27 erfasst werden. Dieser Verfahrweg stellt bspw. den Fahrerbremswunsch dar. Positionsempfangseinrichtung 2 ist bspw. in oder an dem Zylindergehäuse von der Bremsbetätigungsvorrichtung angebracht, innerhalb welchem Zylinderkolben 27 linear verfährt.

Spulenanordnung 4 umfasst ebenfalls Erregerspule 5 und erste Empfangsspule 6 mit Kompensationswindung 8. Kompensationswindung 8 von erster Empfangsspule 6 ist zumindest bereichsweise ober- oder unterhalb eines Teilabschnitts von Erregerspule 5 angeordnet. Kompensationswindung 8 folgt dabei der linearen Formgebung des Teilabschnitts von Erregerspule 5. In dem gezeigten Beispiel ist Positionsempfangseinrichtung 2 rechteckförmig ausgeführt.

In der Figur 4 wird Spulenanordnung 4 von Positionsempfangseinrichtung 2 der ersten beispielsgemäßen induktiven Positionssensoreinrichtung 1 aus der Figur 1 näher dargestellt.

Spulenanordnung 4 umfasst Erregerspule 5 mit Anschluss 15, erste Empfangsspule 6 mit Anschluss 16 und eine zweite Empfangsspule 7 mit Anschluss 17. Erste Empfangsspule 6 umfasst eine Anzahl an Windungen. Bei Anschluss 16 ist eine erste Positiv-Windung 10 vorgesehen, welche in eine Negativ-Windung 11 übergeht, welche wiederum in eine zweite Positiv-Windung 12 übergeht. Von zweiter Positiv-Windung 12 geht Kompensationswindung 8 ab. Kompensationswindung 8 erstreckt sich über Teilabschnitt 24 von Erregerspule 5. Dabei liegt Kompensationswindung 8 ober- oder unterhalb von Teilabschnitt 24 der Erregerspule 5. Empfangsspule 6 ist eine sogenannte Kosinus-Empfangsspule.

Zweite Empfangsspule 7 umfasst bei Anschluss 17 eine Positiv-Windung 13, welche in eine Negativ-Windung 14 übergeht.

Die Windungen 10, 11 und 12 von erster Empfangsspule 6, sowie die Windungen 13 und 14 von zweiter Empfangsspule 6 sind diametral von Erregerspule 5 umschlossen. Dadurch induziert das Erregerfeld von Erregerspule 5 eine Spannung in den Windungen 10 bis 14 der ersten und zweiten Empfangsspulen 6 und 7.

Dabei ist Kompensationswindung 8 von erster Empfangsspule 6 dem Erregerfeld von Erregerspule 5 derart ausgesetzt, dass der Anteil des Erregerfeldes, welches Kompensationswindung 8 durchsetzt, einen definierten Anteil von zusätzlicher Spannung in Kompensationswindung 8 induziert. Dabei entspricht diese Spannung dem Anteil, der zur Kompensation des verschobenen Offsets notwendig ist.

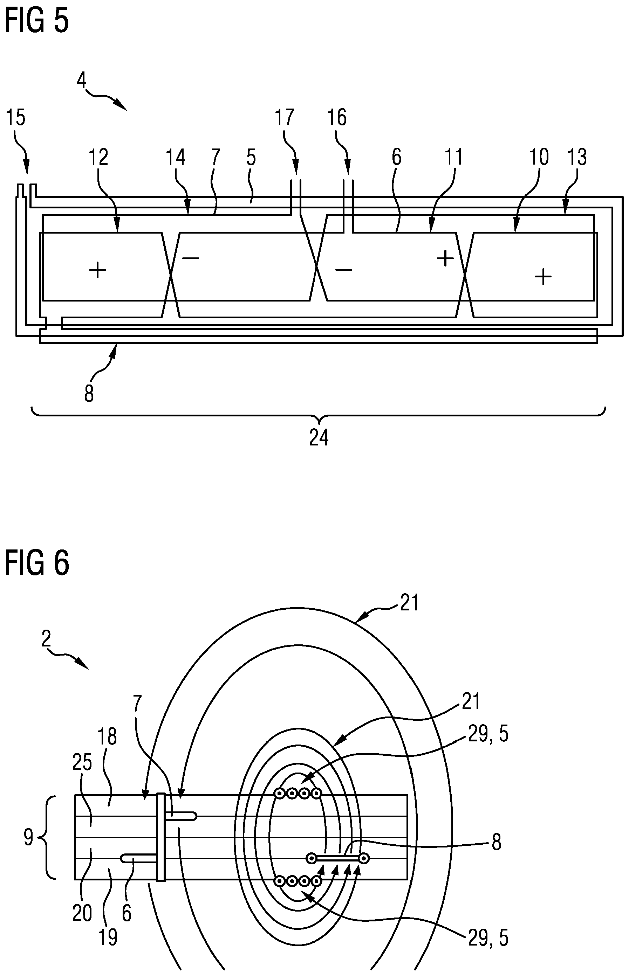

Ein ähnlicher Aufbau von Spulenordnung 4 ist in der Figur 5 gezeigt, welche die Spulenanordnung 4 von zweiter beispielsgemäßer induktiver Positionssensoreinrichtung 1 aus der Figur 3 zeigt. Spulenanordnung 4 ist in diesem Fall rechteckt-förmig ausgeführt. Erste und zweite Empfangsspule 6 und 7 umfassen die gleiche Anzahl und Art von Windungen 8, 10 bis 14 wie im oberen Beispiel erläutert.

Auch in diesem Fall erstreckt sich Kompensationswindung 8 von erster Empfangsspule 6 über einen Teilabschnitt von Erregerspule 5.

Figur 6 verdeutlicht Positionsempfangseinrichtung 2 mit ihrer mehrlagigen Leiterplatte 9 im Schnitt. Leiterplatte 9 umfasst eine erste (oberste) Lage 18 und eine zweite (unterste) Lage 19. Dazwischen ist eine erste Zwischenlage 20 und eine zweite Zwischenlage 25 vorgesehen. Erste Zwischenlage 20 ist der zweiten Lage 19 zugewandt. Zweite Zwischenlage 25 ist der ersten Lage 18 zugewandt.

Beispielsgemäß umfasst Erregerspule 5 eine Anzahl an Wicklungen 29. Diese Wicklungen 29 sind zugleich an erster Lage 18 und an zweiter Lage 19 aufgebracht. An mehreren Anknüpfungspunkten geht Erregerspule von erster Lage 18 in zweite Lage 19 über und wieder zurück. Durch Bestromung von Erregerspule 5 mit einem Wechselstrom erzeugt diese ein Erregerfeld 21. Erregerfeld 21 wirkt auf die Windungen von erster und zweiter Empfangsspule 6 und 7 ein. Erregerfeld 21 wirkt insbesondere auf Kompensationswindung 8 von erster Empfangsspule 6 ein.

Die Positiv- und Negativ-Windungen von erster und zweiter Empfangsspule 6 und 7 befinden sich seitlich von den Wicklungen 29 der Erregerspule 5. Die Positiv- und Negativ-Windungen sind von Erregerspule 5 umschlossen und von deren Wicklungen 29 leicht räumlich beabstandet. Dadurch wird ein schwaches Erregerfeld 21 auf die Positiv- und Negativ-Windungen ein. Positiv- und Negativ-Windungen von erster und zweiter Empfangsspule 6 und 7 befinden sich in den Zwischenlagen 20 und 25 von Leiterplatte 9. Es ist möglich, dass die Positiv- und Negativ-Windungen der jeweiligen Empfangsspule 6 und 7 an entsprechenden Anknüpfungspunkten von der ersten Zwischenlage 20 in die zweite Zwischenlage 25 übergehen und wieder zurück. Dadurch erstecken sich die Positiv- und Negativ-Windungen der Empfangsspule 6 und 7 in vertikaler Richtung durch Leiterplatte 9. In horizontaler Richtung verlaufen die Positiv- und Negativ-Windungen der Empfangsspule 6 und 7 wie in den Figuren 3 bis 5 gezeigt.

Beispielsgemäß ist Kompensationswindung 8 von erster Erregerspule 5 an erster Zwischenschicht 20 aufgebracht. Beispielsgemäß liegt ein Teilbereich von Kompensationswindung 8 in einem vertikalen Bereich zwischen Erregerspule 5, welche an erster Lage 18 und zweiter Lage 19 von Leiterplatte 9 aufgebracht ist. Dadurch liegt Kompensationswindung 8 in einem starken Wirkbereich von Erregerfeld 21.

Erregerfeld 21 induziert dadurch nicht nur in den Positiv- und Negativ-Windungen von erster Empfangsspule 6 eine Spannung, sondern auch in der Kompensationswindung 8. Dadurch wird der Signalversatz von erster Empfangsspule 6 derart verändert, dass sich das Signal von erster Empfangsspule 6 dem Signal von zweiter Empfangsspule 7 annähert.

### Bezugszeichenliste

- 1: Positionssensoreinrichtung
- 2: Positionsempfangseinrichtung
- 3: Positionsgeberelement
- 4: Spulenanordnung
- 5: Erregerspule
- 6: erste Empfangsspule
- 7: zweite Empfangsspule
- 8: Kompensationswindung
- 9: Leiterplatte
- 10: erste Positiv-Windung der ersten Empfangsspule
- 11: Negativ-Windung der ersten Empfangsspule
- 12: zweite Positiv-Windung der ersten Empfangsspule
- 13: Positiv-Windung der zweiten Empfangsspule
- 14: Negativ-Windung der zweiten Empfangsspule
- 15: Anschluss der Erregerspule
- 16: Anschluss der ersten Empfangsspule
- 17: Anschluss der zweiten Empfangsspule
- 18: erste Lage
- 19: zweite Lage
- 20: erste Zwischenlage
- 21: Erregerfeld
- 22: Flügel
- 23: Flügelaussparung
- 24: Teilabschnitt
- 25: zweite Zwischenlage
- 26: Flügelrad
- 27: Zylinderkolben
- 28: Befestigungsring
- 29: Wicklungen

## Patentansprüche

1. Induktive Positionssensoreinrichtung (1) zur Erfassung einer Positionslage eines Positionsgeberelements (3) mit einer Positionsempfangseinrichtung (2), wobei die Positionsempfangseinrichtung (2) eine mehrlagig aufgebaute Leiterplatte (9) mit einer Spulenanordnung (4) umfasst, wobei die Spulenanordnung (4) zumindest eine Erregerspule (5) und zumindest eine erste und eine zweite Empfangsspule (6; 7) umfasst, wobei die erste und die zweite Empfangsspule (6; 7) jeweils eine Anzahl an Windungen (8, 10, 11, 12, 13, 14) umfassen, welche von der Erregerspule (5) zumindest teilweise umschlossen sind, **dadurch gekennzeichnet, dass** die erste Empfangsspule (6) eine Kompensationswindung (8) umfasst, welche zumindest bereichsweise ober- und/oder unterhalb eines Teilabschnitts (24) der Erregerspule (5) angeordnet ist, wobei die mehrlagig aufgebaute Leiterplatte (9) eine erste Lage (18), eine zweite Lage (19) und zumindest eine zwischen der ersten und der zweiten Lage (18; 19) angeordnete erste Zwischenlage (20) umfasst, wobei die Erregerspule (5) eine Anzahl an Wicklungen (29) umfasst, welche an der ersten und an der zweiten Lage (18; 19) aufgebracht sind, wobei die Kompensationswindung (8) der ersten Empfangsspule (6) an der ersten Zwischenlage (20) aufgebracht ist, und die Kompensationswindung (8) in einem vertikalen Bereich zwischen den Wicklungen (29) der Erregerspule (5) der ersten Lage (18) und den Wicklungen (29) der Erregerspule (5) der zweiten Lage (19) bereichsweise angeordnet ist.

2. Induktive Positionssensoreinrichtung (1) nach Anspruch 1, **dadurch gekennzeichnet, dass** die erste Empfangsspule (6) mit ihren Windungen (8, 10, 11, 12) an der ersten und der zweiten Zwischenlage (20; 25) aufgebracht ist.

3. Induktive Positionssensoreinrichtung (1) nach einem der Ansprüche 1 bis 2, **dadurch gekennzeichnet, dass** die zweite Empfangsspule (6) mit ihren Windungen (13, 14) an der ersten und einer zweiten Zwischenlage (20; 25) aufgebracht ist, wobei die zweite Zwischenlage (25) zwischen der ersten und der zweiten Lage (18; 19) angeordnet ist.

4. Induktive Positionssensoreinrichtung (1) nach den Ansprüchen 1 bis 3, **dadurch gekennzeichnet, dass** die Windungen (8, 10, 11, 12, 13, 14) der ersten und der zweiten Empfangsspule (6; 7) jeweils eine Anzahl an Positiv- und Negativwindungen (10, 11, 12; 13, 14) umfassen, wobei diese Positiv- und Negativwindungen (10, 11, 12; 13, 14) diametral von den Wicklungen (29) der Erregerspule (5) umschlossen sind.

5. Induktive Positionssensoreinrichtung (1) nach einem der Ansprüche 1 bis 4, **dadurch gekennzeichnet, dass** die erste Empfangsspule (6) eine Kosinus-Empfangsspule ist.

6. Induktive Positionssensoreinrichtung (1) nach einem der Ansprüche 1 bis 5, **dadurch gekennzeichnet, dass** die zweite Empfangsspule (7) eine Sinus-Empfangsspule ist.

7. Induktive Positionssensoreinrichtung (1) nach einem der Ansprüche 1 bis 6, **dadurch gekennzeichnet, dass** die Erregerspule (5), die erste und die zweite Empfangsspule (6; 7) jeweils einen Anschluss (15; 16; 17) an eine Auswerteinheit umfassen.

8. Bremsanlage für ein Kraftfahrzeug, umfassend eine Bremsbetätigungseinrichtung mit einem beweglichen Bremszylinderkolben (27) und/oder einem Elektromotor mit einer Antriebswelle und einem Flügelrad (26), wobei das Positionsgeberelement (3) von der Positionssensoreinrichtung (1) gemäß einem der vorangehenden Ansprüche durch den Bremszylinderkolben (27) oder das Flügelrad (26) dargestellt ist.

## Claims

1. An inductive position sensor device (1) for detecting a positional location of a position encoder element (3) with a position receiving device (2), wherein the position receiving device (2) comprises a printed circuit board (9) of multilayer construction with a coil arrangement (4), wherein the coil arrangement (4) comprises at least one excitation coil (5) and at least a first and a second receiving coil (6; 7), wherein the first and second receiving coils (6; 7) each have a number of windings (8, 10, 11, 12, 13, 14) which are at least partially enclosed by the excitation coil (5), **characterised in that** the first receiving coil (6) comprises a compensation winding (8) which is arranged at least regionally above and/or below a partial section (24) of the excitation coil (5), wherein the printed circuit board (9) of multilayer construction comprises a first layer (18), a second layer (19) and at least one first intermediate layer (20) arranged between the first and second layers (18; 19), wherein the excitation coil (5) comprises a number of windings (29) which are applied to the first and to the second layer (18; 19), wherein the compensation coil (8) of the first receiving coil (6) is applied to the first intermediate layer (20) and the compensation coil (8) is arranged regionally in a vertical region between the windings (29) of the excitation coil (5) of the first layer (18) and the windings (29) of the excitation coil (5) of the second layer (19).

2. The inductive position sensor device (1) as claimed in claim 1, **characterised in that** the first receiving coil (6) with its windings (8, 10, 11, 12) is applied to the first and the second intermediate layers (20; 25).

3. The inductive position sensor device (1) as claimed in any one of claims 1 to 2, **characterised in that** the second receiving coil (6) is applied with its windings (13, 14) to the first and a second intermediate layer (20; 25), wherein the second intermediate layer (25) is arranged between the first and the second layers (18; 19).

4. The inductive position sensor device (1) as claimed in claims 1 to 3, **characterised in that** the windings (8, 10, 11, 12, 13, 14) of the first and the second receiving coils (6; 7) each comprise a number of positive and negative windings (10, 11, 12; 13, 14), wherein said positive and negative windings (10, 11, 12; 13, 14) are surrounded diametrically by the windings (29) of the excitation coil (5).

5. The inductive position sensor device (1) as claimed in any one of claims 1 to 4, **characterised in that** the first receiving coil (6) is a cosine receiving coil.

6. The inductive position sensor device (1) as claimed in any one of claims 1 to 5, **characterised in that** the second receiving coil (7) is a sine receiving coil.

7. The inductive position sensor device (1) as claimed in any one of claims 1 to 6, **characterised in that** the excitation coil (5), the first and the second receiving coils (6; 7) each comprise a connection (15; 16; 17) to an evaluation unit.

8. A brake system for a motor vehicle, comprising a brake actuation device having a movable brake cylinder piston (27) and/or an electric motor having a drive shaft and an impeller (26), wherein the position encoder element (3) of the position sensor device (1) according to any one of the preceding claims is represented by the brake cylinder piston (27) or the impeller (26).

## Revendications

1. Dispositif capteur de position inductif (1) pour détecter une position d'un élément détecteur de position (3) avec un dispositif récepteur de position (2), dans lequel le dispositif récepteur de position (2) comprend une carte de circuits imprimés multicouche (9) avec un agencement de bobines (4), dans lequel l'agencement de bobines (4) comprend au moins une bobine d'excitation (5) et au moins une première et une seconde bobine de réception (6 ; 7), dans lequel la première et la seconde bobine de réception (6 ; 7) comprennent chacune un certain nombre de spires (8, 10, 11, 12, 13, 14), lesquelles sont au moins en partie entourées par la bobine d'excitation (5), **caractérisé en ce que** la première bobine de réception (6) comprend une spire de compensation (8), laquelle est disposée au moins par zones en partie au-dessus et/ou en dessous d'une section (24) de la bobine d'excitation (5), dans lequel la carte de circuits imprimés multicouche (9) comprend une première couche (18), une seconde couche (19) et au moins une première couche intermédiaire (20) disposée entre les première et seconde couches (18 ; 19), dans lequel la bobine d'excitation (5) comprend un certain nombre d'enroulements (29), lesquels sont appliqués aux première et seconde couches (18 ; 19), dans lequel la spire de compensation (8) de la première bobine de réception (6) est appliquée à la première couche intermédiaire (20), et la spire de compensation (8) est disposée par zones dans une zone verticale entre les enroulements (29) de la bobine d'excitation (5) de la première couche (18) et les enroulements (29) de la bobine d'excitation (5) de la seconde couche (19).

2. Dispositif capteur de position inductif (1) selon la revendication 1, **caractérisé en ce que** la première bobine de réception (6) avec ses enroulements (8, 10, 11, 12) est appliquée à la première et à la seconde couche intermédiaire (20 ; 25).

3. Dispositif capteur de position inductif (1) selon l'une des revendications 1 à 2, **caractérisé en ce que** la seconde bobine de réception (6) avec ses enroulements (13, 14) est appliquée à la première et à une seconde couche intermédiaire (20 ; 25), dans lequel la seconde couche intermédiaire (25) est disposée entre la première et la seconde couche (18 ; 19).

4. Dispositif capteur de position inductif (1) selon les revendications 1 à 3, **caractérisé en ce que** les enroulements (8, 10, 11, 12, 13, 14) de la première et de la seconde bobine de réception (6 ; 7) comprennent chacun un certain nombre d'enroulements positifs et négatifs (10, 11, 12 ; 13, 14), dans lequel ces enroulements positifs et négatifs (10, 11, 12 ; 13, 14) sont diamétralement entourés par les enroulements (29) de la bobine d'excitation (5).

5. Dispositif capteur de position inductif (1) selon l'une des revendications 1 à 4, **caractérisé en ce que** la première bobine de réception (6) est une bobine de réception cosinus.

6. Dispositif capteur de position inductif (1) selon l'une des revendications 1 à 5, **caractérisé en ce que** la seconde bobine de réception (7) est une bobine de réception sinus.

7. Dispositif capteur de position inductif (1) selon l'une des revendications 1 à 6, **caractérisé en ce que** la bobine d'excitation (5), la première et la seconde bobine de réception (6 ; 7) comprennent chacune une connexion (15 ; 16 ; 17) à une unité d'évaluation.

8. Système de freinage pour véhicule automobile, comprenant un dispositif d'actionnement de frein avec un piston de cylindre de frein mobile (27) et/ou un moteur électrique avec un arbre d'entraînement et une roue à ailettes (26), dans lequel l'élément détecteur de position (3) est représenté par le dispositif capteur de position (1) selon l'une des revendications précédentes par le piston de cylindre de frein (27) ou la roue à ailettes (26).
